(19) Europäisches Patentamt
European Patent Office
Office européen des brevets

(11) EP 3 438 071 A1

(12) **EUROPEAN PATENT APPLICATION**
published in accordance with Art. 153(4) EPC

(43) Date of publication:
**06.02.2019 Bulletin 2019/06**

(21) Application number: **17775573.3**

(22) Date of filing: **31.03.2017**

(51) Int Cl.:
***C03C 27/12*** (2006.01) ***B32B 17/10*** (2006.01)
***B32B 27/22*** (2006.01) ***B32B 27/30*** (2006.01)
***C08F 8/28*** (2006.01) ***C08F 8/44*** (2006.01)
***C08L 29/14*** (2006.01)

(86) International application number:
**PCT/JP2017/013711**

(87) International publication number:
**WO 2017/171042 (05.10.2017 Gazette 2017/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.03.2016 JP 2016070651**

(71) Applicant: **Sekisui Chemical Co., Ltd.**
**Osaka-shi, Osaka 530-8565 (JP)**

(72) Inventors:
- **SHINDO, Kaoru**
**Mishima-gun**
**Osaka 618-0021 (JP)**
- **NAGAI, Yasuharu**
**Mishima-gun**
**Osaka 618-0021 (JP)**
- **TANIKAWA, Yuji**
**Mishima-gun**
**Osaka 618-0021 (JP)**

(74) Representative: **Ter Meer Steinmeister & Partner Patentanwälte mbB**
**Nymphenburger Straße 4**
**80335 München (DE)**

(54) **POLYVINYL ACETAL IONOMER RESIN FILM, AND LAMINATED GLASS**

(57) To provide a polyvinyl acetal ionomer resin film having a high Young's modulus and a high elongation at break. The polyvinyl acetal ionomer resin film according to the present invention includes a polyvinyl acetal ionomer resin containing polyvinyl acetal into which an acid group is introduced, and the polyvinyl acetal ionomer resin has a content of the acid group of 1.5% by mole or more and 10% by mole or less, and the polyvinyl acetal ionomer resin has a neutralization degree of 10% or more and 90% or less.

[FIG. 1]

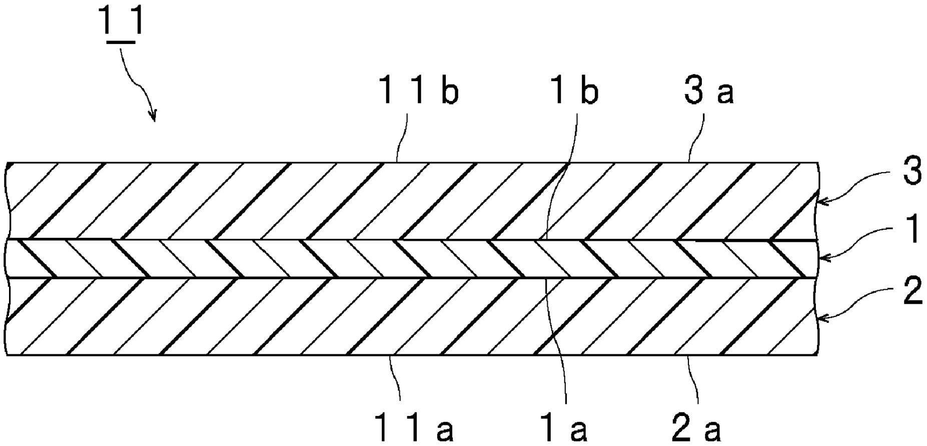


EP 3 438 071 A1

**Description**

## TECHNICAL FIELD

The present invention relates to a polyvinyl acetal ionomer resin film containing a polyvinyl acetal ionomer resin. Also, the present invention relates to laminated glass prepared with the polyvinyl acetal ionomer resin film.

## BACKGROUND ART

Resin films are used in various uses. As a resin film used in laminated glass, an interlayer film for laminated glass is known. Laminated glass is produced by sandwiching an interlayer film for laminated glass between two glass plates.

Since the laminated glass generates only a small amount of scattering glass fragments even when subjected to external impact and broken, the laminated glass is excellent in safety. As such, the laminated glass is widely used for automobiles, railway vehicles, aircraft, ships, buildings and the like.

Examples of the interlayer film for laminated glass include a single-layered interlayer film having a one-layer structure and a multi-layered interlayer film having a two or more-layer structure.

As an example of the interlayer film for laminated glass, the following Patent Document 1 discloses a sound insulating layer including 100 parts by weight of a polyvinyl acetal resin with an acetalization degree of 60 to 85% by mole, 0.001 to 1.0 part by weight of at least one kind of metal salt among an alkali metal salt and an alkaline earth metal salt, and a plasticizer in an amount greater than 30 parts by weight. This sound insulating layer can be used alone as a single-layered interlayer film.

Furthermore, the following Patent Document 1 also describes a multi-layered interlayer film in which the sound insulating layer and another layer are layered. Another layer to be layered with the sound insulating layer contains 100 parts by weight of a polyvinyl acetal resin with an acetalization degree of 60 to 85% by mole, 0.001 to 1.0 part by weight of at least one kind of metal salt among an alkali metal salt and an alkaline earth metal salt, and a plasticizer in an amount of 30 parts by weight or less.

The following Patent Document 2 discloses an interlayer film which is constituted of a polymer layer having a glass transition temperature of 33°C or more. Patent Document 2 indicates that the polymer layer is disposed between glass plates each having a thickness of 4.0 mm or less.

The following Patent Document 3 discloses a polyvinyl butyral blend containing a polyvinyl butyral component having a chemically bound ionomer group.

### Related Art Documents

### Patent Documents

Patent Document 1: JP 2007-070200 A
Patent Document 2: US2013/0236711A1
Patent Document 3: US4969744

## SUMMARY OF THE INVENTION

### PROBLEMS TO BE SOLVED BY THE INVENTION

In the conventional interlayer film (resin film) as described in Patent Documents 1 and 2, the Young's modulus is low or the elongation at break is low. In a conventional interlayer film, it is difficult to achieve both the high Young's modulus and the high elongation at break.

In a resin film prepared with the polyvinyl butyral blend according to Patent Document 3, the elongation at break cannot be sufficiently high although the Young's modulus is increased to some extent.

It is an object of the present invention to provide a polyvinyl acetal ionomer resin film having a high Young's modulus and a high elongation at break. It is also an object of the present invention to provide laminated glass prepared with the polyvinyl acetal ionomer resin film.

## MEANS FOR SOLVING THE PROBLEMS

According to a broad aspect of the present invention, there is provided a polyvinyl acetal ionomer resin film, including a polyvinyl acetal ionomer resin containing polyvinyl acetal into which an acid group is introduced, the polyvinyl acetal ionomer resin having a content of the acid group of 1.5% by mole or more and 10% by mole or less, the polyvinyl acetal ionomer resin having a neutralization degree of 10% or more and 90% or less.

In a specific aspect of the polyvinyl acetal ionomer resin film according to the present invention, the polyvinyl acetal ionomer resin film has a shear storage equivalent modulus at 80°C of 0.5 MPa or more and 3 MPa or less.

It is preferred that the polyvinyl acetal ionomer resin have an acetalization degree of 50% by mole or more and 80% by mole or less, the polyvinyl acetal ionomer resin have a content of hydroxyl group of 5% by mole or more and 40% by mole or less, and the polyvinyl acetal ionomer resin have an acetylation degree of 0.1% by mole or more and 30% by mole or less.

It is preferred that the polyvinyl acetal ionomer resin film according to the present invention contain a plasticizer. It is preferred that a content of the plasticizer be 10 parts by weight or more relative to 100 parts by weight of the polyvinyl acetal ionomer resin.

In a specific aspect of the polyvinyl acetal ionomer resin film according to the present invention, the polyvinyl acetal ionomer resin film has a thickness of 3 mm or less.

It is preferred that the polyvinyl acetal ionomer resin film according to the present invention be an interlayer film for laminated glass used for obtaining laminated glass. It is preferred that the polyvinyl acetal ionomer resin film according to the present invention be an interlayer film for laminated glass used for obtaining laminated glass by being arranged between a first glass plate having a thickness of 1.8 mm or less and a second glass plate.

According to a broad aspect of the present invention, there is provided laminated glass including a first lamination glass member, a second lamination glass member and the polyvinyl acetal ionomer resin film, the polyvinyl acetal ionomer resin film being arranged between the first lamination glass member and the second lamination glass member.

## EFFECT OF THE INVENTION

The polyvinyl acetal ionomer resin film according to the present invention includes a polyvinyl acetal ionomer resin containing polyvinyl acetal into which an acid group is introduced, the polyvinyl acetal ionomer resin has a content of the acid group of 1.5% by mole or more and 10% by mole or less, and the polyvinyl acetal ionomer resin has a neutralization degree of 10% or more and 90% or less, so that it is possible to heighten the Young's modulus and heighten the elongation at break.

## BRIEF DESCRIPTION OF DRAWINGS

[Fig. 1] Fig. 1 is a sectional view schematically showing a polyvinyl acetal ionomer resin film according to a first embodiment of the present invention.

[Fig. 2] Fig. 2 is a sectional view schematically showing a polyvinyl acetal ionomer resin film according to a second embodiment of the present invention.

[Fig. 3] Fig. 3 is a sectional view schematically showing one example of laminated glass prepared with the polyvinyl acetal ionomer resin film shown in Fig. 1.

[Fig. 4] Fig. 4 is a sectional view schematically showing one example of laminated glass prepared with the polyvinyl acetal ionomer resin film shown in Fig. 2.

[Fig. 5] Fig. 5 is a schematic view for illustrating a measurement method of flexural rigidity.

## MODE(S) FOR CARRYING OUT THE INVENTION

Hereinafter, the present invention will be described in detail.

It is preferred that the polyvinyl acetal ionomer resin film (hereinafter, sometimes described as the resin film) according to the present invention be an interlayer film for laminated glass (hereinafter, also sometimes described as the interlayer film) used for obtaining laminated glass. However, the use of the resin film according to the present invention is not limited to an interlayer film. The resin film according to the present invention can be used, for example, as a sealing agent for solar battery, a coating agent, an adhesive, or the like besides an interlayer film.

The resin film according to the present invention contains a polyvinyl acetal ionomer resin. The polyvinyl acetal ionomer resin has polyvinyl acetal into which an acid group is introduced.

The polyvinyl acetal ionomer resin has, for example, a $-CH_2-CH-$ group in a main chain. The polyvinyl acetal

ionomer resin has a polyvinyl acetal skeleton. The polyvinyl acetal skeleton has, for example, a $-CH_2-CH-$ group in a main chain. To the carbon atom in the "-CH-" moiety in the $-CH_2-CH-$ group, one other group is bound. In the polyvinyl acetal ionomer resin, it is preferred that $-CH_2-CH-$ groups be consecutive in the main chain.

The polyvinyl acetal ionomer resin has an acid group. The content of the acid group in the polyvinyl acetal ionomer resin is 1.5% by mole or more and 10% by mole or less. The polyvinyl acetal ionomer resin has a neutralization degree of 10% or more and 90% or less.

In the present invention, since the above-described configuration is provided, it is possible to heighten the Young's modulus in the resin film and the interlayer film, and to heighten the elongation at break in the resin film and the interlayer film. In the present invention, it is possible to achieve both the high Young's modulus and the high elongation at break.

Further, in the present invention, since the above-described configuration is provided, it is possible to heighten the breaking strength in the resin film and the interlayer film.

When the laminated glass is used as window glass, for example, in a side door of an automobile, deflection caused by the low rigidity of the laminated glass can hinder the opening and closing of the window glass because there is no frame for fixing the laminated glass.

In recent years, it is demanded to reduce the thickness of a glass plate so as to reduce the weight of the laminated glass. In laminated glass prepared by sandwiching an interlayer film between two glass plates, reducing the thicknesses of the glass plates poses the problem of extreme difficulty in keeping the flexural rigidity sufficiently high.

Regarding the aforementioned problems, since the above-described configuration is provided in the present invention, it is possible to achieve high flexural rigidity of the resin film and the interlayer film.

For example, it is possible to reduce the weight of the laminated glass as long as the flexural rigidity of the laminated glass can be increased owing to the interlayer film even with thin glass plate. When the laminated glass is lightweight, it is possible to reduce the amount of the material for use in the laminated glass, and it is possible to reduce the environmental load. Further, by using the lightweight laminated glass in automobiles, it is possible to improve the fuel efficiency, and as a result, it is possible to reduce the environmental load.

Further, in the present invention, since the above-described configuration is provided, it is possible to increase the formability of the resin film and the interlayer film. For example, since the resin film or the interlayer film has appropriate flexibility and appropriate hardness, it is possible to prepare laminated glass neatly without deformation during autoclaving for obtaining the laminated glass.

Further, in the present invention, since the above-described configuration is provided, it is possible to heighten the penetration resistance of the resin film, the interlayer film and the laminated glass.

Examples of the method for producing the polyvinyl acetal ionomer resin include a method including copolymerization of polyvinyl acetate and a monomer having a group that can become an acid group, saponification, acetalization with an aldehyde, and ionomerization, a method including acetalization of polyvinyl alcohol (PVA) with an aldehyde having a group that can become an acid group, and ionomerization, and a method including acetalization of polyvinyl acetal with an aldehyde having group that can become an acid group, and ionomerization.

For example, the polyvinyl alcohol is obtained by saponifying polyvinyl acetate. The saponification degree of the polyvinyl alcohol generally falls within the range of 70 to 99.9% by mole.

Examples of the group that can become an acid group include groups derived from a carboxyl group, groups derived from a sulfonic acid group, and groups derived from a phosphoric acid group. From the viewpoint of further improving the productivity in production of polyvinyl acetal into which an acid group is introduced, the group that can become an acid group is preferably a group derived from a carboxyl group or a group derived from a sulfonic acid group, more preferably a group derived from a carboxyl group.

Examples of the acid for introducing an acid group include carboxylic acid, sulfonic acid, and phosphoric acid. From the viewpoint of further improving the productivity in production of polyvinyl acetal into which an acid group is introduced, the acid is preferably carboxylic acid or sulfonic acid, more preferably carboxylic acid. In the polyvinyl acetal ionomer resin, it is preferred that an acid group be introduced by the above acid.

Examples of the monomer having a group that can become an acid group include (meth)acrylic acid, 2-acryloyloxy ethyl acid phosphate and 2-acryloyloxy ethyl-succinic acid.

Examples of the aldehyde that can become an acid group include terephthalic aldehyde acid, glyoxylic acid, and levulinic acid.

Examples of the method for ionomerization include a method of adding a metal-containing compound into a solution, and a method of adding a metal-containing compound during kneading. The metal-containing compound may be added in a state of a solution.

It is preferred that the metal-containing compound be a metal salt or a metal oxide.

Examples of the metal in the metal-containing compound include, but are not particularly limited to, alkali metals, alkaline earth metals and transition metals. From the viewpoint of further improving the Young's modulus and the formability, Na, Li, K, Mg, Zn, Cu, Co, Al, Fe, Ni, Cr or Mn is preferred. It is preferred that the polyvinyl acetal ionomer resin

contain Na, Zn, Mg or K. It is preferred that the above metal be used for ionomerization. It is particularly preferred that Na be used.

The content of the acid group in the polyvinyl acetal ionomer resin is 1.5% by mole or more and 10% by mole or less. By setting the content of the acid group to the above lower limit or more and the above upper limit or less, the effect of the present invention is exerted, and in particular, the Young's modulus, the tensile elongation, the flexural rigidity, and the formability are enhanced. The content of the acid group is preferably 1.8% by mole or more, and more preferably 2% by mole or more and is preferably 7% by mole or less, and more preferably 5% by mole or less. When the content of the acid group is the above lower limit or more, the Young's modulus and the tensile elongation are further improved. When the content of the acid group is the above upper limit or less, the formability is further improved.

The content of the acid group can be determined by using NMR or FT-IR, or the like. Specifically, the content of the acid group can be determined by conducting measurement with an apparatus "NICOLET 6700" (available from Thermo Scientific) at a measurement wavelength of 4000 to 400 $cm^{-1}$ with a scanning number of times of 32, and calculating the content of the acid group on the basis of the peak from each acid group and the peak from the salt of each acid. For example, in the case of carboxylic acid, the content of the carboxyl group can be calculated from carbonyl of carboxylic acid (C=O: 1697$cm^{-1}$), and carboxylate (approximately 1500 to 1600$cm^{-1}$).

The polyvinyl acetal ionomer resin has a neutralization degree of 10% or more and 90% or less. By setting the neutralization degree to the above lower limit or more and the above upper limit or less, the effect of the present invention is exerted, and in particular, the Young's modulus, the tensile elongation, and the formability are enhanced. The neutralization degree is preferably 13% or more, and more preferably 15% or more and is preferably 70% or less, and more preferably 60% or less. When the neutralization degree is the above lower limit or more, the Young's modulus, the flexural rigidity, and the tensile elongation are further improved. When the neutralization degree is the above upper limit or less, the sound insulating properties and the formability are further improved.

The neutralization degree can be determined by using FT-IR or the like. In FT-IR, it is possible to calculate a neutralization degree, for example, from the height of the signal of the carboxyl group (1715$cm^{-1}$) and the heights of the signals of the metal bases of the carboxyl group (different depending on the metal, 1568 $cm^{-1}$ in the case of Zn, 1550$cm^{-1}$ in the case of Na) .

From the viewpoint of further enhancing the Young's modulus, a shear storage equivalent modulus at 80°C of the resin film is preferably 0.3 MPa or more, more preferably 0.5 MPa or more, and further preferably 0.7 MPa or more.

From the viewpoint of further enhancing the formability, a shear storage equivalent modulus at 80°C is preferably 3.5 MPa or less, more preferably 3 MPa or less, and further preferably 2.5 MPa or less.

The shear storage equivalent modulus indicates the shear storage modulus when the multilayer body is regarded as a single layer. In the case of a single layer, the shear storage equivalent modulus indicates the shear storage modulus of the single layer. Regarding the shear storage equivalent modulus, when slipping does not occur between layers, it is possible to measure the shear storage equivalent modulus by subjecting the layer configuration that forms the resin film to measurement of the shear storage modulus by a general method for measuring dynamic viscoelasticity.

As a method for measuring the shear storage equivalent modulus, a method of measuring viscoelasticity by using a viscoelasticity measuring apparatus "DMA + 1000" available from Metravib directly after keeping the resin film for 12 hours in an environment of ambient temperature of 23 ± 2°C and a humidity of 25 ± 5% can be recited. It is preferred that the resin film be cut out as a piece of 50 mm long and 20 mm wide, and the measurement be conducted in a shear mode in the condition of raising the temperature from -50°C to 100°C at a temperature raising speed of 2°C/minute, and in the condition of 1 Hz frequency and 0.05% strain.

Shear storage equivalent modulus G'* is determined by the following formula (X).

$$G'^{*}=(\Sigma iai)/(\Sigma iai/G'i) \quad \text{...Formula (X)}$$

G'i in the above formula (X) indicates a shear storage modulus of the i-th layer in the resin film, and ai indicates the thickness of the i-th layer in the resin film. Σi means calculating the sum of the numerical values of i layers.

The resin film according to the present invention has a one-layer structure or a two or more-layer structure. The resin film according to the present invention may have a one-layer structure and may have a two or more-layer structure. The resin film according to the present invention may have a two-layer structure and may have a three or more-layer structure. The resin film according to the present invention may be a single-layered resin film or a multi-layered resin film.

The resin film may be provided only with a first layer, or provided with a second layer in addition to the first layer. It is preferred that the resin film be further provided with the second layer. When the resin film is provided with the second layer, the second layer is arranged on a first surface side of the first layer.

The resin film may be provided with a third layer in addition to the first layer and the second layer. It is preferred

that the resin film be further provided with a third layer. When the resin film is provided with the second layer and the third layer, the third layer is arranged on a second surface side opposite to the first surface of the first layer.

It is preferred that the surface opposite to the first layer side of the second layer be a surface on which a lamination glass member or a glass plate is layered. It is preferred that the thickness of the glass plate layered on the second layer be 1.3 mm or less. The second surface that is opposite to the first surface (surface of second layer side) of the first layer may be a surface on which a lamination glass member or a glass plate is layered. It is preferred that the thickness of the glass plate layered on the first layer be 1.8 mm or less. It is preferred that the surface opposite to the first layer side of the third layer be a surface on which a lamination glass member or a glass plate is layered. It is preferred that the thickness of the glass plate layered on the third layer be 1.8 mm or less.

It is preferred that the resin film be an interlayer film for laminated glass used for obtaining laminated glass by being arranged between a first glass plate and a second glass plate. It is preferred that the total of the thickness of the first glass plate and the thickness of the second glass plate be 3 mm or less because the flexural rigidity can be made sufficiently high owing to the resin film. It is preferred that the resin film be an interlayer film for laminated glass used for obtaining laminated glass by being arranged between a first glass plate and a second glass plate. It is preferred that the resin film be an interlayer film for laminated glass used for obtaining laminated glass by being arranged between a first glass plate having a thickness of 1.8 mm or less and a second glass plate, because the flexural rigidity can be made sufficiently high owing to the resin film. It is preferred that the resin film be an interlayer film for laminated glass used for obtaining laminated glass by being arranged between a first glass plate having a thickness of 1.8 mm or less and a second glass plate having a thickness of 1.8 mm or less, because the flexural rigidity can be made sufficiently high owing to the resin film.

Hereinafter, specific embodiments of the present invention will be described with reference to the drawings.

Fig. 1 is a sectional view schematically showing a polyvinyl acetal ionomer resin film according to the first embodiment of the present invention.

A resin film 11 shown in Fig. 1 is a multi-layered resin film having a two or more-layer structure. It is preferred that the resin film 11 be an interlayer film for laminated glass for obtaining laminated glass. The resin film 11 is provided with a first layer 1, a second layer 2 and a third layer 3. The second layer 2 is arranged on a first surface 1a of the first layer 1 to be layered thereon. The third layer 3 is arranged on a second surface 1b at the opposite side of the first surface 1a of the first layer 1 to be layered thereon. The first layer 1 is an intermediate layer. Each of the second layer 2 and the third layer 3 is a protective layer and is a surface layer in the present embodiment. The first layer 1 is arranged between the second layer 2 and the third layer 3 to be sandwiched therebetween. Accordingly, the resin film 11 has a multilayer structure (second layer 2/first layer 1/third layer 3) in which the second layer 2, the first layer 1, and the third layer 3 are layered in this order.

In this connection, other layers may be arranged between the second layer 2 and the first layer 1 and between the first layer 1 and the third layer 3, respectively. It is preferred that the second layer 2 and the first layer 1, and the first layer 1 and the third layer 3 be directly layered, respectively. Examples of the other layer include a layer containing polyethylene terephthalate and the like.

Fig. 2 is a sectional view schematically showing a polyvinyl acetal ionomer resin film according to the second embodiment of the present invention.

A resin film 11A shown in Fig. 2 is a single-layered resin film having a one layer structure. The resin film 11A is singly constituted by a first layer. It is preferred that the resin film 11A be an interlayer film for laminated glass used for obtaining laminated glass.

Hereinafter, other details of the first layer, the second layer and the third layer which constitute the resin film according to the present invention, and other details of each ingredient contained in the first layer, the second layer and the third layer will be described.

(Resin)

The resin film contains a polyvinyl acetal ionomer resin. It is preferred that the first layer, the second layer, and the third layer contain a resin. Examples of the resin include thermosetting resins and thermoplastic resins. It is preferred that the polyvinyl acetal ionomer resin be a polyvinyl butyral ionomer resin. It is preferred that the polyvinyl acetal resin be a polyvinyl butyral resin. One kind of each of the polyvinyl acetal ionomer resin and the aforementioned resin may be used alone, and two or more kinds thereof may be used in combination.

The weight average molecular weight of each of the polyvinyl acetal ionomer resin and the above-described resin is preferably 30000 or more, more preferably 100000 or more, and further preferably 120000 or more and is preferably 1500000 or less, more preferably 1300000 or less, and further preferably 1200000 or less. When the weight average molecular weight is the above lower limit or more and the above upper limit or less, it is possible to easily obtain the resin film by extrusion molding, and further, an appropriate shear storage equivalent modulus is obtained, the elongation at break and the breaking strength are improved, and the flexural rigidity and the penetration resistance are

further improved.

The weight average molecular weight refers to a weight average molecular weight, calculated on the polystyrene equivalent basis, measured by gel permeation chromatography (GPC) .

When a resin other than the polyvinyl acetal ionomer resin is used, the resin is preferably a thermoplastic resin, and is preferably a polyvinyl acetal resin, a (meth)acrylic resin such as an acrylic polymer, a urethane polymer, a silicone polymer, rubber, or vinyl acetate polymer, and is more preferably a polyvinyl acetal resin or a (meth)acrylic resin, and is further preferably a polyvinyl acetal resin. By using the polyvinyl acetal resin, the toughness is effectively enhanced, and the penetration resistance is further enhanced.

It is preferred that the resin have a polar group, and the resin have a hydroxyl group. Existence of such a group further heightens the adhesivity between the resin film and the lamination glass member, and further heightens the flexural rigidity and the penetration resistance.

It is preferred that the acrylic polymer be a polymer of a polymerizing component containing a (meth)acrylic ester. It is preferred that the acrylic polymer be a poly(meth)acrylic ester.

The poly(meth)acrylic ester is not particularly limited. Examples of the poly(meth)acrylic ester include poly(methyl (meth)acrylate), poly(ethyl (meth)acrylate), poly(n-propyl (meth)acrylate), poly(i-propyl (meth)acrylate), poly(n-butyl (meth)acrylate), poly(i-butyl (meth)acrylate), poly(t-butyl (meth)acrylate), poly(2-ethylhexyl (meth)acrylate), poly(octyl (meth)acrylate), poly(propyl (meth)acrylate), poly(2-ethyloctyl (meth)acrylate), poly(nonyl (meth)acrylate), poly(isononyl (meth)acrylate), poly(decyl (meth)acrylate), poly(isodecyl (meth)acrylate), poly(lauryl (meth)acrylate), poly(isotetradecyl (meth)acrylate), poly(2-hydroxyethyl (meth)acrylate), poly(4-hydroxybutyl (meth)acrylate), poly(cyclohexyl (meth)acrylate), and poly(benzyl (meth)acrylate). For the ease of mixing into the polyvinyl acetal ionomer, a polyacrylic ester is preferred, and poly(ethyl acrylate), poly(n-butyl acrylate), poly(2-hydroxyethyl poly(meth)acrylate), poly(4-hydroxybutyl (meth)acrylate), poly(2-ethylhexyl acrylate) or poly(octyl acrylate) is more preferred. It is preferred that the interlayer film containsuch a preferable acrylic polymer. By using such a preferable poly(meth)acrylic ester, the balance of the productivity of the resin film and the characteristics of the resin film is further improved. One kind of the poly (meth) acrylic ester may be used alone, and two or more kinds thereof may be used in combination.

The first layer preferably contains a thermoplastic resin (hereinafter, sometimes described as the thermoplastic resin (1)), preferably contains, as the thermoplastic resin (1), a polyvinyl acetal resin (hereinafter, sometimes described as the polyvinyl acetal resin (1)), more preferably contains, as the thermoplastic resin (1), a polyvinyl acetal ionomer resin (hereinafter, sometimes described as the polyvinyl acetal ionomer resin (1)). The second layer preferably contains a thermoplastic resin (hereinafter, sometimes described as the thermoplastic resin (2)), preferably contains, as the thermoplastic resin (2), a polyvinyl acetal resin (hereinafter, sometimes described as the polyvinyl acetal resin (2)), more preferably contains, as the thermoplastic resin (2), a polyvinyl acetal ionomer resin (hereinafter, sometimes described as the polyvinyl acetal ionomer resin (2)). The third layer preferably contains a thermoplastic resin (hereinafter, sometimes described as the thermoplastic resin (3)), preferably contains, as the thermoplastic resin (3), a polyvinyl acetal resin (hereinafter, sometimes described as the polyvinyl acetal resin (3)), more preferably contains, as the thermoplastic resin (3), a polyvinyl acetal ionomer resin (hereinafter, sometimes described as the polyvinyl acetal ionomer resin (3)).

Examples of the thermoplastic resin include a polyvinyl acetal resin, a (meth)acrylic resin, a vinyl acetate copolymer, an ethylene-vinyl acetate copolymer resin, an ethylene-acrylic acid copolymer resin, a polyurethane resin, a polyvinyl alcohol resin, and the like. Thermoplastic resins other than these may be used.

For example, the polyvinyl acetal ionomer resin and the polyvinyl acetal resin can be produced by acetalizing polyvinyl alcohol with an aldehyde. It is preferred that the polyvinyl acetal ionomer resin and the polyvinyl acetal resin be an acetalized product of polyvinyl alcohol. For example, the polyvinyl alcohol is obtained by saponifying polyvinyl acetate. The saponification degree of the polyvinyl alcohol generally falls within the range of 70 to 99.9% by mole.

The average polymerization degree of the polyvinyl alcohol (PVA) is preferably 200 or more, more preferably 500 or more, even more preferably 1500 or more, further preferably 1600 or more, particularly preferably 2600 or more, and most preferably 2700 or more and is preferably 5000 or less, more preferably 4000 or less, and further preferably 3500 or less. When the average polymerization degree is the above lower limit or more, the penetration resistance of laminated glass is further enhanced. When the average polymerization degree is the above upper limit or less, formation of a resin film is facilitated.

The average polymerization degree of the polyvinyl alcohol is determined by a method in accordance with JIS K6726 "Testing methods for polyvinyl alcohol".

It is preferred that the number of carbon atoms of the acetal group in the polyvinyl acetal resin be 2 to 10, and it is more preferred that the number of carbon atoms of the acetal group be 2 to 5.

In general, as the aldehyde, an aldehyde with 1 to 10 carbon atoms is suitably used. Examples of the aldehyde with 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, benzaldehyde, and the like. Acetaldehyde, propionaldehyde, n-butyraldehyde, isobutyraldehyde, n-hexylaldehyde or n-valeraldehyde is preferred, acetaldehyde, propionaldehyde, n-butyraldehyde, isobutyraldehyde or n-valeraldehyde is more

preferred, and n-butyraldehyde or n-valeraldehyde is further preferred. One kind of the aldehyde may be used alone, and two or more kinds thereof may be used in combination.

The content of the hydroxyl group (the amount of hydroxyl groups) in the polyvinyl acetal resin (1) and the polyvinyl acetal ionomer resin (1) is preferably 3% by mole or more, more preferably 5% by mole or more, and further preferably 7% by mole or more and is preferably 40% by mole or less, and more preferably 35% by mole or less. When the content of the hydroxyl group is the above lower limit or more, the mechanical strength of the resin film is further enhanced. In particular, when the content of the hydroxyl group in the polyvinyl acetal resin (1) and the polyvinyl acetal ionomer resin (1) is 5% by mole or more, the reaction efficiency is high and the productivity is excellent, and when the content of the hydroxyl group is 35% by mole or less, ionomer can be formed effectively and the elongation at break effectively increases. Moreover, when the content of the hydroxyl group is the above upper limit or less, the flexibility of the resin film is enhanced and the handling of the resin film is facilitated.

The content of the hydroxyl group in each of the polyvinyl acetal resin (2), the polyvinyl acetal ionomer resin (2), the polyvinyl acetal resin (3) and the polyvinyl acetal ionomer resin (3) is preferably 10% by mole or more, more preferably 13% by mole or more, more preferably 15% by mole or more, even more preferably 18% by mole or more, further preferably 20% by mole or more, and particularly preferably 22% by mole or more and is preferably 37% by mole or less, more preferably 36.5% by mole or less, and further preferably 36% by mole or less. When the content of the hydroxyl group is the above lower limit or more, the flexural rigidity is further enhanced, and the adhesive strength of the resin film is further enhanced. In particular, when the content of the hydroxyl group in each of the polyvinyl acetal resin (2), the polyvinyl acetal ionomer resin (2), the polyvinyl acetal resin (3) and the polyvinyl acetal ionomer resin (3) is 10% by mole or more, the reaction efficiency is high and the productivity is excellent, and when the content of the hydroxyl group is 37% by mole or less, ionomer can be formed effectively and the elongation at break and the flexural rigidity effectively increase. Moreover, when the content of the hydroxyl group is the above upper limit or less, the flexibility of the resin film is enhanced and the handling of the resin film is facilitated.

From the viewpoint of further enhancing the sound insulating properties, it is preferred that the content of the hydroxyl group in the polyvinyl acetal resin (1) and the polyvinyl acetal ionomer resin (1) be lower than the content of the hydroxyl group in the polyvinyl acetal resin (2), the polyvinyl acetal ionomer resin (2), the polyvinyl acetal resin (3) and the polyvinyl acetal ionomer resin (3). From the viewpoint of still further enhancing the sound insulating properties, the absolute value of the difference between the content of the hydroxyl group in the polyvinyl acetal resin (1) and the polyvinyl acetal ionomer resin (1) and the content of the hydroxyl group in the polyvinyl acetal resin (2), the polyvinyl acetal ionomer resin (2), the polyvinyl acetal resin (3) and the polyvinyl acetal ionomer resin (3) is preferably 1% by mole or more, more preferably 5% by mole or more, further preferably 9% by mole or more, particularly preferably 10% by mole or more, and most preferably 12% by mole or more. It is preferred that the absolute value of the difference between the content of the hydroxyl group in the polyvinyl acetal resin (1) and the polyvinyl acetal ionomer resin (1) and the content of the hydroxyl group in the polyvinyl acetal resin (2), the polyvinyl acetal ionomer resin (2), the polyvinyl acetal resin (3) and the polyvinyl acetal ionomer resin (3) be 20% by mole or less.

The content of the hydroxyl group is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be measured in accordance with JIS K6728 "Testing methods for polyvinyl butyral".

The acetylation degree (the amount of acetyl groups) of the polyvinyl acetal resin (1) and the polyvinyl acetal ionomer resin (1) is preferably 0.05% by mole or more, more preferably 0.1% by mole or more, and further preferably 1% by mole or more and is preferably 25% by mole or less, more preferably 30% by mole or less, and further preferably 20% by mole or less. When the acetylation degree is the above lower limit or more, the compatibility between the resin and a plasticizer is enhanced. When the acetylation degree is the above upper limit or less, with regard to the resin film and laminated glass, the moisture resistance thereof is enhanced. In particular, when the acetylation degree of the polyvinyl acetal resin (1) and the polyvinyl acetal ionomer resin (1) is 0.1% by mole or more and 25% by mole or less, the elongation at break is further enhanced, and excellent penetration resistance is achieved.

The acetylation degree of each of the polyvinyl acetal resin (2), the polyvinyl acetal ionomer resin (2), the polyvinyl acetal resin (3) and the polyvinyl acetal ionomer resin (3) is preferably 0.01% by mole or more, and more preferably 0.5% by mole or more and is preferably 10% by mole or less, and more preferably 2% by mole or less. When the acetylation degree is the above lower limit or more, the compatibility between the resin and a plasticizer is enhanced. When the acetylation degree is the above upper limit or less, with regard to the resin film and laminated glass, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be measured in accordance with JIS K6728 "Testing methods for polyvinyl butyral".

The acetalization degree (butyralization degree in the case of polyvinyl butyral resin) of the polyvinyl acetal

resin (1) and the polyvinyl acetal ionomer resin (1) is preferably 45% by mole or more, more preferably 50% by mole or more, and further preferably 55% by mole or more and is preferably 90% by mole or less, more preferably 80% by mole or less, and further preferably 70% by mole or less. When the acetalization degree is the above lower limit or more, the compatibility between the resin and a plasticizer is enhanced. When the acetalization degree is the above upper limit or less, the reaction time required for producing the polyvinyl acetal resin is shortened.

The acetalization degree (butyralization degree in the case of polyvinyl butyral resin) of each of the polyvinyl acetal resin (2), the polyvinyl acetal ionomer resin (2), the polyvinyl acetal resin (3) and the polyvinyl acetal ionomer resin (3) is preferably 55% by mole or more, and more preferably 60% by mole or more and is preferably 75% by mole or less, and more preferably 71% by mole or less. When the acetalization degree is the above lower limit or more, the compatibility between the resin and a plasticizer is enhanced. When the acetalization degree is the above upper limit or less, the reaction time required for producing the polyvinyl acetal resin is shortened.

The acetalization degree is a mole fraction, represented in percentage, obtained by dividing a value obtained by subtracting the amount of ethylene groups to which the hydroxyl group is bonded and the amount of ethylene groups to which the acetyl group is bonded from the total amount of ethylene groups in the main chain by the total amount of ethylene groups in the main chain.

In this connection, it is preferred that the content of the hydroxyl group (the amount of hydroxyl groups), the acetalization degree (the butyralization degree) and the acetylation degree be calculated from the results measured by a method in accordance with JIS K6728 "Testing methods for polyvinyl butyral". In this context, a method in accordance with ASTM D1396-92 may be used. When a polyvinyl butyral ionomer resin or a polyvinyl butyral resin is used, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

(Plasticizer)

It is preferred that the resin film contain a plasticizer. It is preferred that the first layer contain a plasticizer (hereinafter, sometimes described as a plasticizer (1)). It is preferred that the second layer contain a plasticizer (hereinafter, sometimes described as a plasticizer (2)). It is preferred that the third layer contain a plasticizer (hereinafter, sometimes described as a plasticizer (3)). By the use of the plasticizer or further by using the resin and a plasticizer together, the adhesive force of a layer containing the polyvinyl acetal resin and the plasticizer to a lamination glass member or another layer is moderately enhanced. The plasticizer is not particularly limited. One kind of the plasticizer may be used alone and two or more kinds thereof may be used in combination.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Organic ester plasticizers are preferred. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decanoic acid, and the like.

Examples of the polybasic organic acid ester include an ester compound of a polybasic organic acid and an alcohol having a linear or branched structure of 4 to 8 carbon atoms. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

[Chemical 1]

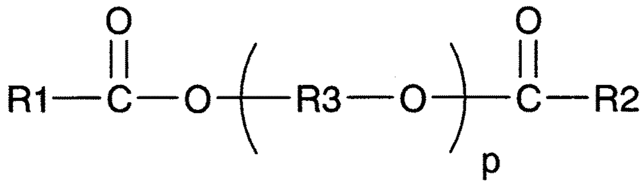

...(1)

In the foregoing formula (1), R1 and R2 each represent an organic group with 2 to 10 carbon atoms, R3 represents an ethylene group, an isopropylene group or a n-propylene group, and p represents an integer of 3 to 10. It is preferred that R1 and R2 in the foregoing formula (1) each be an organic group with 5 to 10 carbon atoms, and it is more preferred that R1 and R2 each be an organic group with 6 to 10 carbon atoms.

It is preferred that the plasticizer contain triethylene glycol di-2-ethylhexanoate (3GO), triethylene glycol di-2-ethylbutyrate (3GH) or triethylene glycol di-2-ethylpropanoate, it is more preferred that the plasticizer contain triethylene glycol di-2-ethylhexanoate or triethylene glycol di-2-ethylbutyrate, and it is further preferred that the plasticizer contain triethylene glycol di-2-ethylhexanoate.

In the resin film, the content of the plasticizer relative to 100 parts by weight of the polyvinyl acetal ionomer resin is preferably 10 parts by weight or more, more preferably 20 parts by weight or more, and further preferably 30 parts by weight or more and is preferably 90 parts by weight or less, more preferably 85 parts by weight or less, and further preferably 80 parts by weight or less. When the content is the above lower limit or more, the flexibility of the resin film is enhanced and the handling of the resin film is facilitated. When the content is the above upper limit or less, formation of the ionomer is less likely to be hindered, and the flexural rigidity and the penetration resistance of laminated glass are further enhanced.

Each of the content of the plasticizer (2) relative to 100 parts by weight of the thermoplastic resin (2), the polyvinyl acetal resin (2) or the polyvinyl acetal ionomer resin (2) (hereinafter, sometimes described as the content (2)) in the second layer, and the content of the plasticizer (3) relative to 100 parts by weight of the thermoplastic resin (3), the polyvinyl acetal resin (3) or the polyvinyl acetal ionomer resin (3) (hereinafter, sometimes described as the content (3)) in the third layer is preferably 10 parts by weight or more, and more preferably 15 parts by weight or more and is preferably 40 parts by weight or less, more preferably 35 parts by weight or less, further preferably 32 parts by weight or less, and particularly preferably 30 parts by weight or less. When the content (2) and the content (3) are the above lower limit or more, the flexibility of the resin film is enhanced and the handling of the resin film is facilitated. When the content (2) and the content (3) are the above upper limit or less, formation of the ionomer is less likely to be hindered, and the flexural rigidity and the penetration resistance of laminated glass are further enhanced.

In the first layer, the content of the plasticizer (1) relative to 100 parts by weight of the thermoplastic resin (1), the polyvinyl acetal resin (1) or the polyvinyl acetal ionomer resin (1) (hereinafter, sometimes described as the content (1)) is preferably 10 parts by weight or more, more preferably 20 parts by weight or more, and further preferably 30 parts by weight or more and is preferably 90 parts by weight or less, more preferably 85 parts by weight or less, and further preferably 80 parts by weight or less. When the content (1) is the above lower limit or more, the flexibility of the resin film is enhanced and the handling of the resin film is facilitated. When the content (1) is the above upper limit or less, formation of the ionomer is less likely to be hindered, and the flexural rigidity and the penetration resistance of laminated glass are further enhanced.

For attaining the sound insulating properties of laminated glass, it is preferred that the content (1) be larger than the content (2) and it is preferred that the content (1) be larger than the content (3).

From the viewpoint of enhancing the sound insulating properties of laminated glass, each of the absolute value of the difference between the content (2) and the content (1) and the absolute value of the difference between the content (3) and the content (1) is preferably 10 parts by weight or more, more preferably 15 parts by weight or more, and further preferably 20 parts by weight or more. Each of the absolute value of the difference between the content (2) and the content (1) and the absolute value of the difference between the content (3) and the content (1) is preferably 80 parts by weight or less, more preferably 75 parts by weight or less, and further preferably 70 parts by weight or less.

(Heat shielding compound)

It is preferred that the resin film contain a heat shielding compound. It is preferred that the first layer contain a heat shielding compound. It is preferred that the second layer contain a heat shielding compound. It is preferred that the third layer contain a heat shielding compound. One kind of the heat shielding compound may be used alone, and

two or more kinds thereof may be used in combination.

It is preferred that the heat shielding compound be constituted of at least one kind of Ingredient X among a phthalocyanine compound, a naphthalocyanine compound, and an anthracyanine compound or be constituted of heat shielding particles. In this case, the heat shielding compound may be constituted of both of the Ingredient X and the heat shielding particles.

Ingredient X:

It is preferred that the resin film contain at least one kind of Ingredient X among a phthalocyanine compound, a naphthalocyanine compound, and an anthracyanine compound. It is preferred that the first layer contain the Ingredient X. It is preferred that the second layer contain the Ingredient X. It is preferred that the third layer contain the Ingredient X. The Ingredient X is a heat shielding compound. One kind of the Ingredient X may be used alone, and two or more kinds thereof may be used in combination.

The Ingredient X is not particularly limited. As the Ingredient X, conventionally known phthalocyanine compound, naphthalocyanine compound, and anthracyanine compound can be used.

With regard to the resin film and laminated glass, from the viewpoint of further enhancing the heat shielding properties thereof, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.

From the viewpoints of effectively enhancing the heat shielding properties and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be at least one kind among phthalocyanine containing vanadium atoms or copper atoms and a derivative of phthalocyanine containing vanadium atoms or copper atoms. With regard to the resin film and laminated glass, from the viewpoint of still further enhancing the heat shielding properties thereof, it is preferred that the Ingredient X have a structural unit in which an oxygen atom is bonded to a vanadium atom.

In 100% by weight of the resin film and in 100% by weight of a layer containing the Ingredient X (a first layer, a second layer, or a third layer), the content of the Ingredient X is preferably 0.001% by weight or more, more preferably 0.005% by weight or more, further preferably 0.01% by weight or more, and particularly preferably 0.02% by weight or more and is preferably 0.2% by weight or less, more preferably 0.1% by weight or less, further preferably 0.05% by weight or less, and particularly preferably 0.04% by weight or less. When the content of the Ingredient X is the above lower limit or more and the above upper limit or less, the heat shielding properties are sufficiently enhanced and the visible light transmittance is sufficiently enhanced. For example, it is possible to make the visible light transmittance 70% or more.

Heat shielding particles:

It is preferred that the resin film contain heat shielding particles. It is preferred that the first layer contain the heat shielding particles. It is preferred that the second layer contain the heat shielding particles. It is preferred that the third layer contain the heat shielding particles. The heat shielding particle is of a heat shielding compound. By the use of heat shielding particles, infrared rays (heat rays) can be effectively cut off. One kind of the heat shielding particles may be used alone, and two or more kinds thereof may be used in combination.

From the viewpoint of further enhancing the heat shielding properties of the resin film and laminated glass, it is more preferred that the heat shielding particles be metal oxide particles. It is preferred that the heat shielding particle be a particle (a metal oxide particle) formed from an oxide of a metal.

The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. As such, infrared rays are generally called heat rays. By the use of the heat shielding particles, infrared rays (heat rays) can be effectively cut off. In this connection, the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride ($LaB_6$) particles, and the like. Heat shielding particles other than these may be used. Since the heat ray shielding function is high, preferred are metal oxide particles, more preferred are ATO particles, GZO particles, IZO particles, ITO particles

or tungsten oxide particles, and particularly preferred are ITO particles or tungsten oxide particles. In particular, since the heat ray shielding function is high and the particles are readily available, preferred are tin-doped indium oxide particles (ITO particles), and also preferred are tungsten oxide particles.

With regard to the resin film and laminated glass, from the viewpoint of further enhancing the heat shielding properties thereof, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

With regard to the resin film and laminated glass, from the viewpoint of further enhancing the heat shielding properties thereof, cesium-doped tungsten oxide particles are particularly preferred. With regard to the resin film and laminated glass, from the viewpoint of still further enhancing the heat shielding properties thereof, it is preferred that the cesium-doped tungsten oxide particles be tungsten oxide particles represented by the formula: $CS_{0.33}WO_3$.

The average particle diameter of the heat shielding particles is preferably 0.01 μm or more, and more preferably 0.02 μm or more and is preferably 0.1 μm or less, and more preferably 0.05 μm or less. When the average particle diameter is the above lower limit or more, the heat ray shielding properties are sufficiently enhanced. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of the resin film and in 100% by weight of a layer containing the heat shielding particles (a first layer, a second layer or a third layer), the content of the heat shielding particles is preferably 0.01% by weight or more, more preferably 0.1% by weight or more, further preferably 1% by weight or more, and particularly preferably 1.5% by weight or more and preferably 6% by weight or less, more preferably 5.5% by weight or less, further preferably 4% by weight or less, particularly preferably 3.5% by weight or less, and most preferably 3% by weight or less. When the content of the heat shielding particles is the above lower limit or more and the above upper limit or less, the heat shielding properties are sufficiently enhanced and the visible light transmittance is sufficiently enhanced.

(Metal salt)

It is preferred that the resin film contain at least one kind of metal salt (hereinafter, sometimes described as Metal salt M) among a magnesium salt, an alkali metal salt and an alkaline earth metal salt. It is preferred that the first layer contain the Metal salt M. It is preferred that the second layer contain the Metal salt M. It is preferred that the third layer contain the Metal salt M. It is preferred that the surface layer contain the Metal salt M. By the use of the Metal salt M, controlling the adhesivity between the resin film and a lamination glass member or the adhesivity between respective layers in the resin film is facilitated. One kind of the Metal salt M may be used alone, and two or more kinds thereof may be used in combination.

It is preferred that the Metal salt M contain at least one kind of metal selected from the group consisting of Li, Na, K, Rb, Cs, Mg, Ca, Sr and Ba. It is preferred that the metal salt contained in the resin film contain at least one kind of metal among K and Mg.

Moreover, it is more preferred that the Metal salt M be an alkali metal salt of an organic acid with 2 to 16 carbon atoms or an alkaline earth metal salt of an organic acid with 2 to 16 carbon atoms, and it is further preferred that the Metal salt M be a magnesium carboxylate with 2 to 16 carbon atoms or a potassium carboxylate with 2 to 16 carbon atoms.

Although the magnesium carboxylate with 2 to 16 carbon atoms and the potassium carboxylate with 2 to 16 carbon atoms are not particularly limited, examples thereof include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg and K in 100% by weight of the resin film and in a layer containing the Metal salt M (a first layer, a second layer, or a third layer) is preferably 5 ppm or more, more preferably 10 ppm or more, and further preferably 20 ppm or more and is preferably 300 ppm or less, more preferably 250 ppm or less, and further preferably 200 ppm or less. When the total of the contents of Mg and K is the above lower limit or more and the above upper limit or less, the adhesivity between the resin film and a lamination glass member or the adhesivity between respective layers in the resin film can be further well controlled.

(Ultraviolet ray screening agent)

It is preferred that the resin film contain an ultraviolet ray screening agent. It is preferred that the first layer contain an ultraviolet ray screening agent. It is preferred that the second layer contain an ultraviolet ray screening agent. It is preferred that the third layer contain an ultraviolet ray screening agent. By the use of an ultraviolet ray screening

agent, even when the resin film and laminated glass are used for a long period of time, the visible light transmittance becomes further difficult to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), an ultraviolet ray screening agent having a benzoate structure (a benzoate compound), and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure or an ultraviolet ray screening agent having a benzoate structure, more preferably an ultraviolet ray screening agent having a benzotriazole structure or an ultraviolet ray screening agent having a benzophenone structure, and further preferably an ultraviolet ray screening agent having a benzotriazole structure.

Examples of the ultraviolet ray screening agent containing a metal oxide include zinc oxide, titanium oxide, cerium oxide, and the like. Furthermore, with regard to the ultraviolet ray screening agent containing a metal oxide, the surface thereof may be coated with any material. Examples of the coating material for the surface of the ultraviolet ray screening agent containing a metal oxide include an insulating metal oxide, a hydrolyzable organosilicon compound, a silicone compound, and the like.

Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), 2-(2'-hydroxy-3',5'-di-amylphenyl)benzotriazole ("Tinuvin 328" available from BASF Japan Ltd.), and the like. It is preferred that the ultraviolet ray screening agent be an ultraviolet ray screening agent having a benzotriazole structure containing a halogen atom, and it is more preferred that the ultraviolet ray screening agent be an ultraviolet ray screening agent having a benzotriazole structure containing a chlorine atom, because those are excellent in ultraviolet ray absorbing performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

From the viewpoint of further suppressing the lowering in visible light transmittance after the lapse of a certain period of time, in 100% by weight of the resin film and in 100% by weight of a layer containing the ultraviolet ray screening agent (a first layer, a second layer or a third layer), the content of the ultraviolet ray screening agent is preferably 0.1% by weight or more, more preferably 0.2% by weight or more, further preferably 0.3% by weight or more, and particularly preferably 0.5% by weight or more and is preferably 2.5% by weight or less, more preferably 2% by weight or less, further preferably 1% by weight or less, and particularly preferably 0.8% by weight or less. In particular, by setting the content of the ultraviolet ray screening agent to be 0.2% by weight or more in 100% by weight of a layer containing the ultraviolet ray screening agent, with regard to the resin film and laminated glass, the lowering in visible light transmittance

thereof after the lapse of a certain period of time can be significantly suppressed.

(Oxidation inhibitor)

It is preferred that the resin film contain an oxidation inhibitor. It is preferred that the first layer contain an oxidation inhibitor. It is preferred that the second layer contain an oxidation inhibitor. It is preferred that the third layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid)ethylenebis(oxyethylene), and the like. One kind or two or more kinds among these oxidation inhibitors are suitably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, 2,2'-methylenebis(4,6-di-t-butyl-1-phenyloxy) (2-ethylhexyloxy) phosphorus, and the like. One kind or two or more kinds among these oxidation inhibitors are suitably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "H-BHT" available from Sakai Chemical Industry Co., Ltd., "IRGANOX 1010" available from BASF Japan Ltd., and the like.

With regard to the resin film and laminated glass, in order to maintain high visible light transmittance thereof over a long period of time, it is preferred that the content of the oxidation inhibitor be 0.1% by weight or more in 100% by weight of the resin film and in 100% by weight of a layer containing the oxidation inhibitor (a first layer, a second layer or a third layer). Moreover, since an effect that commensurate with the addition of an oxidation inhibitor is not attained, it is preferred that the content of the oxidation inhibitor be 2% by weight or less in 100% by weight of the resin film and in 100% by weight of the layer containing the oxidation inhibitor.

(Other ingredients)

Each of the resin film, the first layer, the second layer and the third layer may contain additives such as a coupling agent containing silicon, aluminum or titanium, a dispersing agent, a surfactant, a flame retardant, an antistatic agent, a pigment, a dye, a moisture-resistance improving agent, a fluorescent brightening agent and an infrared ray absorber, as necessary. One kind of these additives may be used alone, and two or more kinds thereof may be used in combination.

(Other details of polyvinyl acetal ionomer resin film)

The thickness of the resin film is not particularly limited. From the viewpoint of the practical aspect and the viewpoint of sufficiently enhancing the penetration resistance and the flexural rigidity of laminated glass, the thickness of the resin film is preferably 0.1 mm or more, and more preferably 0.25 mm or more and is preferably 3 mm or less, and more preferably 1.5 mm or less. When the thickness of the resin film is the above lower limit or more, the penetration resistance and the flexural rigidity of laminated glass are enhanced. When the thickness of the resin film is the above upper limit or less, the transparency of the resin film is further improved.

The thickness of the resin film is designated as T. The thickness of the first layer is preferably 0.035T or more, more preferably 0.0625T or more, and further preferably 0.1T or more and is preferably 0.4T or less, more preferably 0.375T or less, further preferably 0.25T or less, and particularly preferably 0.15T or less. When the thickness of the first layer is 0.4T or less, the flexural rigidity is further improved.

The thickness of each of the second layer and the third layer is preferably 0.3T or more, more preferably 0.3125T

or more, and further preferably 0.375T or more and is preferably 0.97T or less, more preferably 0.9375T or less, and further preferably 0.9T or less. The thickness of each of the second layer and the third layer may be 0.46875T or less, and may be 0.45T or less. When the thickness of each of the second layer and the third layer is the above lower limit or more and the above upper limit or less, the rigidity and the sound insulating properties of the resin film and laminated glass are further enhanced.

The total thickness of the second layer and the third layer is preferably 0.625T or more, more preferably 0.75T or more, and further preferably 0.85T or more and is preferably 0.97T or less, more preferably 0.9375T or less, and further preferably 0.9T or less. When the total thickness of the second layer and the third layer is the above lower limit or more and the above upper limit or less, the rigidity and the sound insulating properties of the resin film and laminated glass are further enhanced.

The interlayer film may be an interlayer film having a uniform thickness, or may be an interlayer film having varying thickness. The sectional shape of the interlayer film may be a rectangular shape and may be a wedge-like shape.

The method for producing the resin film according to the present invention is not particularly limited. In the case of a single-layered resin film, examples of the production method of the resin film according to the present invention include a method of extruding a resin composition with an extruder. In the case of a multi-layered resin film, examples of the production method of the resin film according to the present invention include a method of separately forming respective resin compositions used for constituting respective layers into respective layers, and then, for example, layering the respective obtained layers, a method of coextruding respective resin compositions used for constituting respective layers with an extruder and layering the respective layers, and the like. A production method of extrusion-molding is preferred because the method is suitable for continuous production.

For the excellent production efficiency of the resin film, it is preferred that the second layer and the third layer contain the same polyvinyl acetal resin, it is more preferred that the second layer and the third layer contain the same polyvinyl acetal resin and the same plasticizer, it is preferred that the second layer and the third layer contain the same polyvinyl acetal ionomer resin, it is more preferred that the second layer and the third layer contain the same polyvinyl acetal ionomer resin and the same plasticizer, and it is further preferred that the second layer and the third layer be formed of the same resin composition.

It is preferred that the resin film have a protrusions and recesses shape in at least one surface of the surfaces of both sides. It is preferred that the resin film have a protrusions and recesses shape in surfaces of both sides. Examples of the method for forming the protrusions and recesses shape include, but are not particularly limited to, a lip emboss method, an emboss roll method, a calender roll method, and a contour extrusion method. The emboss roll method is preferred because a large number of embosses of the protrusions and recesses shape, which is a quantitatively constant protrusions and recesses pattern, can be formed.

(Laminated glass)

Fig. 3 is a sectional view schematically showing one example of laminated glass prepared with the polyvinyl acetal ionomer resin film shown in Fig. 1.

A laminated glass 31 shown in Fig. 3 is provided with a first lamination glass member 21, a second lamination glass member 22 and a resin film 11. The resin film 11 is arranged between the first lamination glass member 21 and the second lamination glass member 22 to be sandwiched therebetween.

The first lamination glass member 21 is layered on a first surface 11a of the resin film 11. The second lamination glass member 22 is layered on a second surface 11b opposite to the first surface 11a of the resin film 11. The first lamination glass member 21 is layered on an outer surface 2a of a second layer 2. The second lamination glass member 22 is layered on an outer surface 3a of a third layer 3.

Fig. 4 is a sectional view schematically showing one example of laminated glass prepared with the polyvinyl acetal ionomer resin film shown in Fig. 2.

A laminated glass 31A shown in Fig. 4 is provided with a first lamination glass member 21, a second lamination glass member 22 and a resin film 11A. The resin film 11A is arranged between the first lamination glass member 21 and the second lamination glass member 22 to be sandwiched therebetween.

The first lamination glass member 21 is layered on a first surface 11a of the resin film 11A. The second lamination glass member 22 is layered on a second surface 11b opposite to the first surface 11a of the resin film 11A.

Thus, the laminated glass according to the present invention includes the first lamination glass member, the second lamination glass member, and the resin film, and the resin film is the polyvinyl acetal ionomer resin film according to the present invention. In the laminated glass according to the present invention, the resin film is arranged between the first lamination glass member and the second lamination glass member.

It is preferred that the first lamination glass member be the first glass plate. It is preferred that the second lamination glass member be the second glass plate.

Examples of the lamination glass member include a glass plate, a PET (polyethylene terephthalate) film, and

the like. As the laminated glass, laminated glass in which a resin film is sandwiched between a glass plate and a PET film or the like, as well as laminated glass in which a resin film is sandwiched between two glass plates, are included. The laminated glass is a laminate provided with a glass plate, and it is preferred that at least one glass plate be used. It is preferred that each of the first lamination glass member and the second lamination glass member be a glass plate or a PET film, and the laminated glass be provided with a glass plate as at least one among the first lamination glass member and the second lamination glass member.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, and the like. The organic glass is synthetic resin glass substituted for inorganic glass. Examples of the organic glass include a polycarbonate plate, a poly(meth)acrylic resin plate, and the like. Examples of the poly(meth)acrylic resin plate include a polymethyl (meth)acrylate plate, and the like.

The thickness of the lamination glass member is preferably 1 mm or more and preferably 5 mm or less, and more preferably 3 mm or less. Moreover, when the lamination glass member is a glass plate, the thickness of the glass plate is preferably 0.5 mm or more, and more preferably 0.7 mm or more and is preferably 5 mm or less, and more preferably 3 mm or less. When the lamination glass member is a PET film, the thickness of the PET film is preferably 0.03 mm or more and preferably 0.5 mm or less.

By using the resin film according to the present invention, it is possible to keep the flexural rigidity of the laminated glass high even when the thickness of the laminated glass is small. From the viewpoint of lightening the laminated glass, lessening the material of the laminated glass to reduce the environmental load, and improving the fuel consumption of automobiles by lightening of the laminated glass to reduce the environmental load, the thickness of the glass plate is preferably 2 mm or less, more preferably 1.8 mm or less, still more preferably 1.5 mm or less, further preferably 1.3 mm or less, still further preferably 1.0 mm or less, and particularly preferably 0.7 mm or less. From the viewpoint of lightening the laminated glass, lessening the material of the laminated glass to reduce the environmental load, and improving the fuel consumption of automobiles by lightening of the laminated glass to reduce the environmental load, the sum of the thickness of the first glass plate and the thickness of the second glass plate is preferably 3.2 mm or less, more preferably 3 mm or less, and further preferably 2.8 mm or less.

The method for producing the laminated glass is not particularly limited. For example, the resin film is sandwiched between the first lamination glass member and the second lamination glass member, and then, passed through pressure rolls or subjected to decompression suction in a rubber bag, so that the air remaining between the first and the second lamination glass members and the resin film is removed to obtain a laminate. Afterward, the laminate is preliminarily bonded at about 70 to 110°C to obtain a preliminarily bonded body. Next, by putting the preliminarily bonded body into an autoclave or by pressing the laminate, the members are press-bonded together at about 120 to 150°C and under a pressure of 1 to 1.5 MPa. In this way, laminated glass can be obtained. At the time of producing the laminated glass, a first layer, a second layer and a third layer may be layered.

Each of the resin film and the laminated glass can be used for automobiles, railway vehicles, aircraft, ships, buildings and the like. Each of the resin film and the laminated glass can also be used for applications other than these applications. It is preferred that the resin film and the laminated glass be a resin film and laminated glass for vehicles or for building, and it is more preferred that the resin film and the laminated glass be a resin film and laminated glass for vehicles. Each of the resin film and the laminated glass can be used for a windshield, side glass, rear glass or roof glass of an automobile, and the like. The resin film and the laminated glass are suitably used for automobiles. The resin film is used for obtaining laminated glass of an automobile.

Hereinafter, the present invention will be described in more detail with reference to examples. The present invention is not limited only to these examples.

The following materials were prepared.

(Polyvinyl acetal resin and polyvinyl acetal ionomer resin)

The polyvinyl acetal resin and the polyvinyl acetal ionomer resin shown in Table 1 below were appropriately used. In all polyvinyl acetal resins and polyvinyl acetal ionomer resins used, n-butyraldehyde with 4 carbon atoms is used for acetalization. The polyvinyl acetal ionomer resin, specifically, the polyvinyl acetal ionomer resin used in Example 1 is obtained in the following manner.

(Polyvinyl acetal ionomer resin used in Example 1)

Introduction of group that can become an ionic functional group by post acetalization, and ionomerization

In a reaction vessel equipped with a thermometer, a stirrer, a nitrogen introducing tube, and a condenser, 20 parts by weight of polyvinyl butyral (average polymerization degree: 800, butyralization degree: 68.0% by mole, content

of the hydroxyl group: 30.8% by mole, acetylation degree: 1.2% by mole) and 100 parts by weight of methanol were added, and polyvinyl butyral was dissolved under stirring. Next, terephthalic aldehyde acid was added, and dissolved, and then 0.1 parts by weight of 35% by weight hydrochloric acid was added, and heated to 60°C under stirring in the reaction vessel. After temperature elevation, the reaction was caused at 60°C for 2 hours.

Then, by cooling the reaction liquid, a solution having a solid content of 20% by weight containing a polyvinyl acetal resin having a group that can become an ionic functional group was obtained. To the obtained solution was added sodium methoxide so that the neutralization degree was 54%. The neutralization degree was calculated from the height of the signal of the carboxyl group (1715cm$^{-1}$) and the height of the signal of the metal base of the carboxyl group (1550cm$^{-1}$ in the case of Na) by measurement at a measurement wavelength ranging from 4000 to 400cm$^{-1}$ with a scanning number of times of 32 with the use of an FTIR apparatus "NICOLET 6700" (available from Thermo Scientific).

The obtained polyvinyl acetal resin having a group that can become an ionic functional group was dissolved in dimethyl sulfoxide-d6, and subjected to measurement of proton NMR, and thus the composition after the reaction was calculated.

(Plasticizer)

Triethylene glycol di-2-ethylhexanoate (3GO)

(Ultraviolet ray screening agent)

Tinuvin 326 (2-(2'-hydroxy-3'-t-butyl-5-methylphenyl)-5-chlorobenzotriazole, "Tinuvin 326" available from BASF Japan Ltd.)

(Oxidation inhibitor)

BHT (2,6-di-t-butyl-p-cresol)

(Examples 1 to 6 and Comparative Examples 1 to 5)

Preparation of composition for forming resin film:

A polyvinyl acetal resin or polyvinyl acetal ionomer resin shown in Table 1 below, a plasticizer (3GO), an ultraviolet ray screening agent (Tinuvin 326) and an oxidation inhibitor (BHT) were mixed to obtain a composition for forming a resin film. The plasticizer was used in an amount shown in Table 1 below, relative to 100 parts by weight of the polyvinyl acetal resin or polyvinyl acetal ionomer resin. The ultraviolet ray screening agent and the oxidation inhibitor were each used in an amount of 0.2 parts by weight, relative to 100 parts by weight of the polyvinyl acetal resin or polyvinyl acetal ionomer resin.

Preparation of resin film:

By extruding the composition for forming a resin film with an extruder, a resin film (thickness: 760 μm) (interlayer film) was prepared.

Preparation of laminated glass:

(For measurement of flexural rigidity)

The obtained interlayer film was cut into a size of 20 cm long × 2.5 cm wide. As the first lamination glass member, and the second lamination glass member, two glass plates (clear float glass, 20 cm long × 2.5 cm wide, 1.2 mm thick) were prepared. The obtained interlayer film was sandwiched between the two glass plates to obtain a laminate. The obtained laminate was put into a rubber bag, and the bag was degassed for 20 minutes with a vacuum degree of 2660 Pa (20 torr). The laminate being degassed was then vacuum pressed while the laminate was retained in an autoclave at 90°C for 30 minutes. The laminate preliminarily press-bonded in this manner was subjected to press-bonding for 20 minutes under conditions of 135°C and a pressure of 1.2 MPa (12 kg/cm$^2$) in the autoclave to obtain a sheet of laminated glass.

(For measurement of penetration resistance)

The obtained interlayer film was cut into a size of 15 cm long × 15 cm wide. As the first lamination glass member and the second lamination glass member, two glass plates (clear float glass, 15 cm long × 15 cm wide, 1.2 mm thick) were prepared. The interlayer film was sandwiched between the two glass plates to obtain a laminate. The laminate was put into a rubber bag and the inside thereof was degassed for 20 minutes at a vacuum degree of 2.6 kPa, after which the laminate was transferred into an oven while keeping the laminate degassed, and furthermore, held in place at 90°C for 30 minutes and pressed under vacuum to subject the laminate to preliminary press-bonding. The preliminarily press-bonded laminate was subjected to press-bonding for 20 minutes under conditions of 135°C and a pressure of 1.2 MPa in an autoclave to obtain a sheet of laminated glass.

(Evaluation)

(1) Shear storage equivalent modulus

Measurement of Shear storage equivalent modulus:

The obtained resin film was cut out into a piece of 50 mm long and 20 mm wide. The resin film was stored for 12 hours in an environment of 23 ± 2°C temperature and 25 ± 5% humidity. Directly after the storage, the resin film was subjected to measurement by using a viscoelasticity measuring apparatus "DMA + 1000" available from Metravib in a shear mode from -50°C to 100°C at a temperature raising speed of 2°C/minute in conditions of 1 Hz frequency and 0.05% strain.

(2) Tensile test (Young's modulus, breaking strength, and elongation at break)

The obtained resin film was subjected to punching with a super dumbbell cutter: SDK-400 available from DUMBBELL CO., LTD. to obtain a test specimen. Thereafter, the test piece was subjected to a tensile test using an autograph AGS-X available from SHIMADZU Corporation at a tension rate of 100 mm/minute in a thermostatic chamber at 23°C, and thus the Young's modulus at 23°C, the breaking strength, and the elongation at break were measured.

(3) Flexural rigidity

The flexural rigidity was evaluated by using the obtained laminated glass.

The flexural rigidity was evaluated by the test method schematically shown in Fig. 5. As the measuring apparatus, UTA-500 available from ORIENTEC Co.,LTD equipped with a three-point bending test jig was used. Under measurement conditions of 20°C (20 ± 3°C), distance D1 of 12 cm, and distance D2 of 20cm, deformation was applied to the laminated glass in the direction of F at a displacement speed of 1 mm/minute, and the stress when displacement of 1.5 mm was applied was measured, and the flexural rigidity was calculated. The flexural rigidity was judged according to the following criteria.

[Criteria for judgment in flexural rigidity]

○: Flexural rigidity is 50 N/mm or more
×: Flexural rigidity is less than 50 N/mm

(4) Penetration resistance

The obtained laminated glass was adjusted so that the surface temperature was 23°C. Then, for each of six sheets of laminated glass, a rigid ball having a mass of 2260 g and a diameter of 82 mm was dropped from the height of 1.5 m to the center portion of the laminated glass. When the rigid ball did not penetrate in 5 seconds after collision of the rigid ball for all of the six sheets of laminated glass, the laminated glass was evaluated as acceptable. When the number of sheets of laminated glass through which the rigid ball did not penetrate in 5 seconds after collision of the rigid ball was 3 or less, the laminated glass was evaluated as unacceptable. When the number of sheets of laminated glass through which the rigid ball did not penetrate in 5 seconds after collision of the rigid ball was 4, separately, another set of six sheets of laminated glass was evaluated for the penetration resistance. When the number of sheets of laminated glass through which the rigid ball did not penetrate in 5 seconds after collision of the rigid ball was 5, one sheet of

laminated glass was additionally tested, and when the rigid ball did not penetrate in 5 seconds after collision of the rigid ball, the laminated glass was evaluated as acceptable.

In the same manner, while the height was increased in 25 cm increments, and a hard sphere with a mass of 2260 g and a diameter of 82 mm was dropped to the center part of each of six sheets of laminated glass to evaluate the penetration resistance of the laminated glass. The penetration resistance was judged according to the following criteria.

[Criteria for judgment in penetration resistance]

○: acceptable even from the height of 2m
×: unacceptable from the height of less than 2 m

The details and the results are shown in Tables 1 and 2 below. In Table 1 below, the description of the ultraviolet ray screening agent and the oxidation inhibitor was omitted.

[Table 1]

| | Resin type | | | | | | | | | Plasticizer | |
|---|---|---|---|---|---|---|---|---|---|---|---|
| | Type | | | | | | | | Content (parts by weight) | Species | Content (parts by weight) |
| | Average polymerization degree of PVA | Acetalization degree (% by mole) | Content of hydroxyl group (% by mole) | Acetylation degree (% by mole) | Acid species | Content of acid group (% by mole) | Metal species for ionomerization | Neutralization degree (%) | | | |
| Example 1 | 800 | 69 | 22 | 1.2 | Carboxylic acid | 3.9 | Na | 54 | 100 | 3GO | 20 |
| Example 2 | 800 | 69 | 22 | 1.2 | Sulfonic acid | 3.9 | Na | 82 | 100 | 3GO | 10 |
| Example 3 | 1700 | 68 | 23 | 1.2 | Carboxylic acid | 3.9 | Zn | 52 | 100 | 3GO | 20 |
| Example 4 | 800 | 69 | 22 | 1.2 | Carboxylic acid | 3.9 | K | 52 | 100 | 3GO | 20 |
| Example 5 | 1700 | 68 | 23 | 1.2 | Carboxylic acid | 3.9 | Na | 30 | 100 | 3GO | 20 |
| Example 6 | 1700 | 68 | 23 | 1.2 | Carboxylic acid | 3.9 | Na | 15 | 100 | 3GO | 20 |
| Comparative Example 1 | 800 | 69 | 22 | 1.2 | - | - | - | - | 100 | 3GO | 20 |
| Comparative Example 2 | 800 | 69 | 22 | 1.2 | Carboxylic acid | 3.9 | - | - | 100 | 3GO | 20 |
| Comparative Example 3 | 800 | 68.2 | 9 | 1.2 | Carboxylic acid | 10.8 | Na | 32 | 100 | 3GO | 20 |
| Comparative Example 4 | 800 | 69 | 22 | 1.2 | Carboxylic acid | 3.9 | Na | 95 | 100 | 3GO | 20 |
| Comparative Example 5 | 800 | 69 | 22 | 1.2 | Carboxylic acid | 3.9 | Na | 5 | 100 | 3GO | 20 |

[Table2]

| | Evaluation | | | | | |
|---|---|---|---|---|---|---|
| | Shear storage equivalent modulus (80°C) | Young's modulus ($N/mm^2$) | Breaking strength ($N/mm^2$) | Elongation at break (%) | Flexural rigidity | Penetration resistance |
| Example 1 | 0.84 MPa | 226 | 32 | 425 | ○ | ○ |
| Example 2 | 1.03 MPa | 248 | 35 | 391 | ○ | ○ |
| Example 3 | 0.89 MPa | 259 | 44 | 552 | ○ | ○ |
| Example 4 | 0.75 MPa | 211 | 31 | 419 | ○ | ○ |
| Example 5 | 0.72 MPa | 222 | 42 | 521 | ○ | ○ |
| Example 6 | 0.64 MPa | 202 | 39 | 506 | ○ | ○ |
| Comparative Example 1 | 0.45 MPa | 123 | 24 | 352 | × | ○ |
| Comparative Example 2 | 0.46 MPa | 145 | 28 | 389 | × | ○ |
| Comparative Example 3 | 0.65 MPa | 255 | 35 | 382 | ○ | × |
| Comparative Example 4 | 0.51 MPa | 252 | 33 | 386 | ○ | × |
| Comparative Example 5 | 0.46 MPa | 148 | 28 | 381 | × | ○ |

**EXPLANATION OF SYMBOLS**

1: First layer
1a: First surface
1b: Second surface
2: Second layer
2a: Outer surface
3: Third layer
3a: Outer surface
11: Resin film (polyvinyl acetal ionomer resin film)
11A: Resin film (polyvinyl acetal ionomer resin film, first layer)
11a: First surface
11b: Second surface
21: First lamination glass member
22: Second lamination glass member
31: Laminated glass
31A: Laminated glass

**Claims**

**1.** A polyvinyl acetal ionomer resin film, comprising a polyvinyl acetal ionomer resin containing polyvinyl acetal into which an acid group is introduced,
the polyvinyl acetal ionomer resin having a content of the acid group of 1.5% by mole or more and 10% by mole or less, and
the polyvinyl acetal ionomer resin having a neutralization degree of 10% or more and 90% or less.

2. The polyvinyl acetal ionomer resin film according to claim 1, which has a shear storage equivalent modulus at 80°C of 0.5 MPa or more and 3 MPa or less.

3. The polyvinyl acetal ionomer resin film according to claim 1 or 2, wherein
the polyvinyl acetal ionomer resin has an acetalization degree of 50% by mole or more and 80% by mole or less,
the polyvinyl acetal ionomer resin has a content of hydroxyl group of 5% by mole or more and 40% by mole or less, and
the polyvinyl acetal ionomer resin has an acetylation degree of 0.1% by mole or more and 30% by mole or less.

4. The polyvinyl acetal ionomer resin film according to any one of claims 1 to 3, further comprising a plasticizer.

5. The polyvinyl acetal ionomer resin film according to claim 4, wherein a content of the plasticizer is 10 parts by weight or more relative to 100 parts by weight of the polyvinyl acetal ionomer resin.

6. The polyvinyl acetal ionomer resin film according to any one of claims 1 to 5, which has a thickness of 3 mm or less.

7. The polyvinyl acetal ionomer resin film according to any one of claims 1 to 6, which is an interlayer film for laminated glass used for obtaining laminated glass.

8. The polyvinyl acetal ionomer resin film according to any one of claims 1 to 7, which is an interlayer film for laminated glass used for obtaining laminated glass by being arranged between a first glass plate having a thickness of 1.8 mm or less and a second glass plate.

9. A laminated glass comprising:

a first lamination glass member;
a second lamination glass member; and
the polyvinyl acetal ionomer resin film according to any one claims 1 to 8,
the polyvinyl acetal ionomer resin film being arranged between the first lamination glass member and the second lamination glass member.

[FIG. 1]

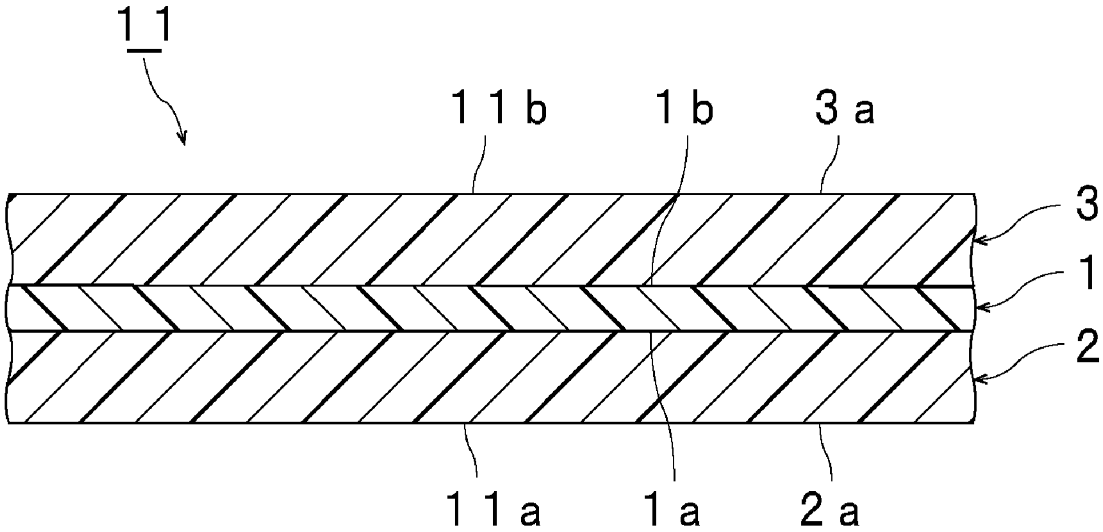


[FIG. 2]

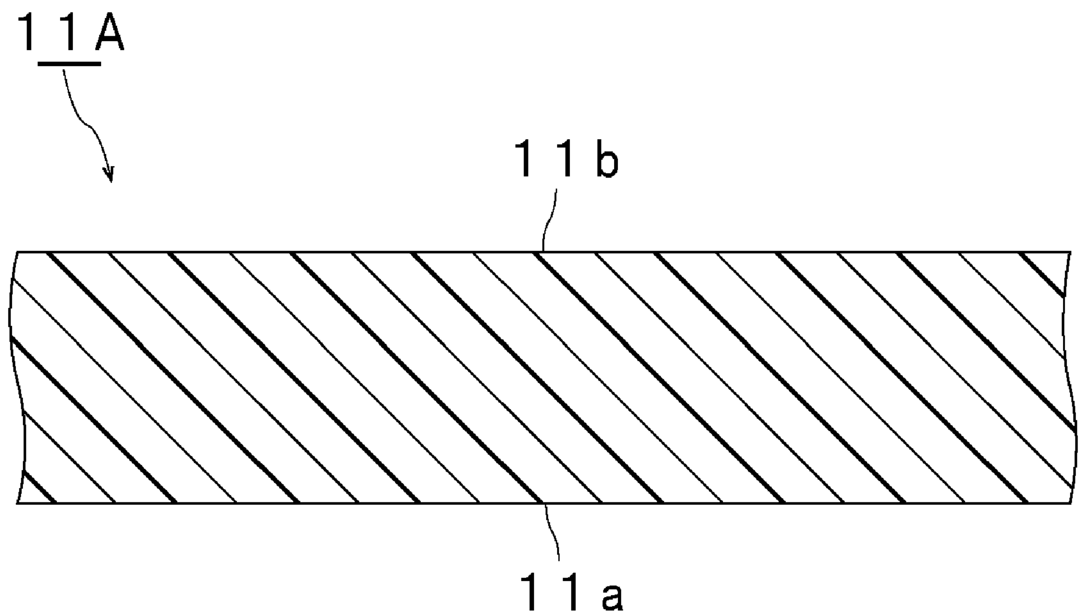

[FIG. 3]

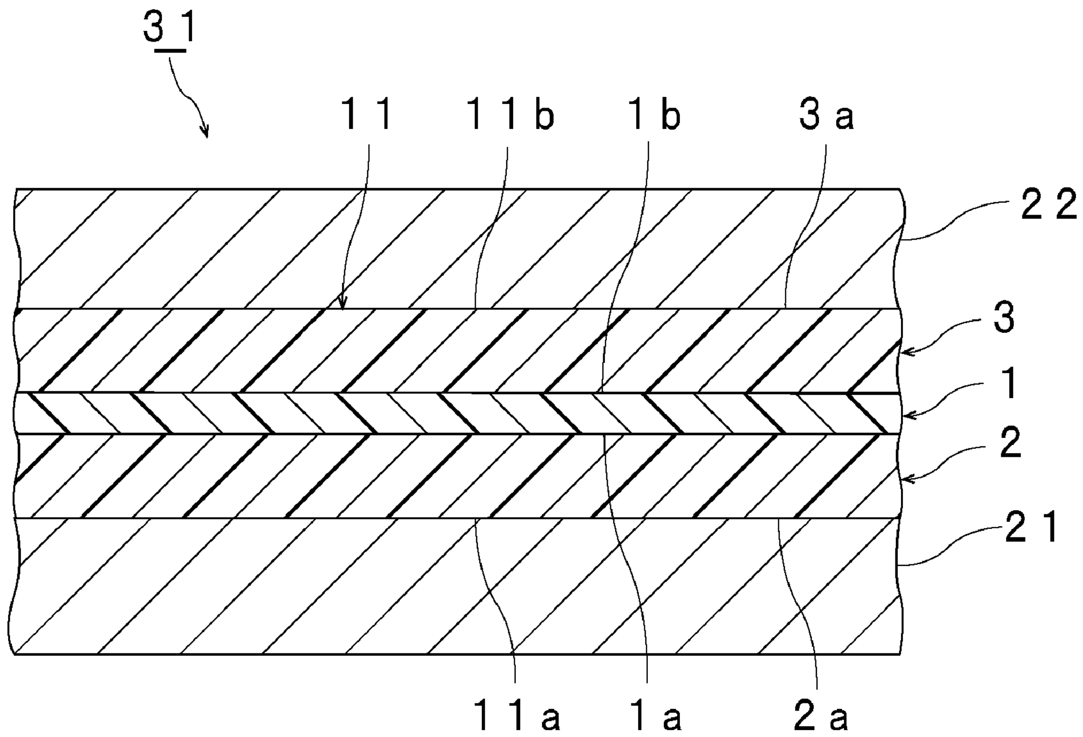


[FIG. 4]

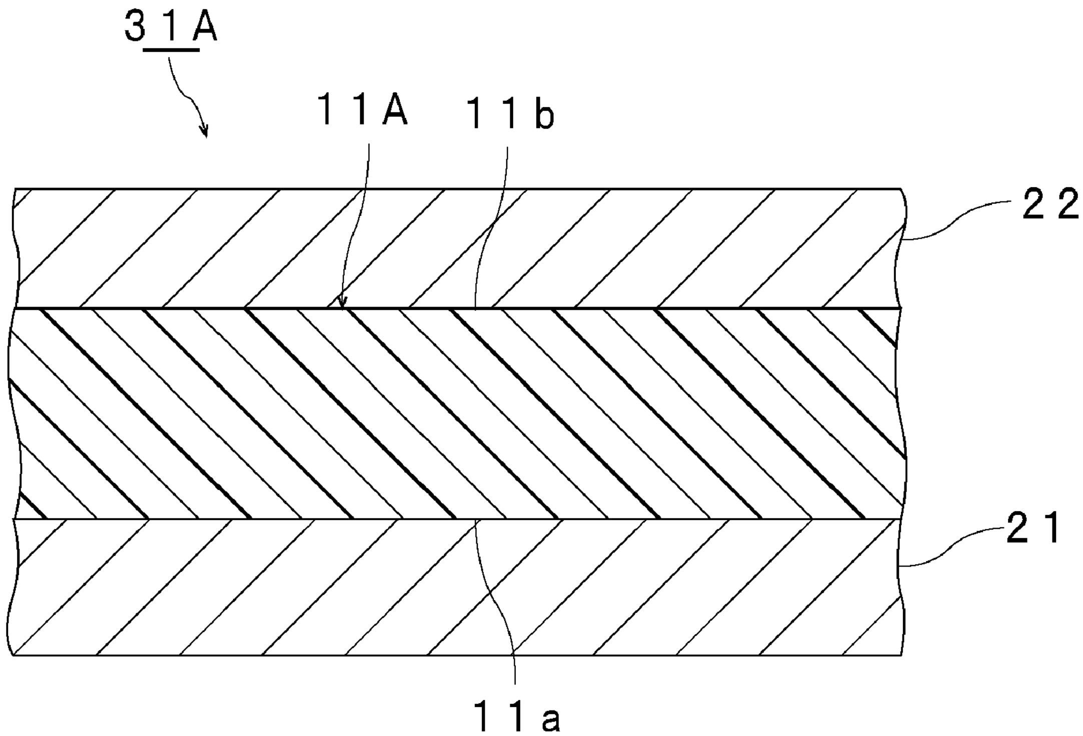

[FIG. 5]

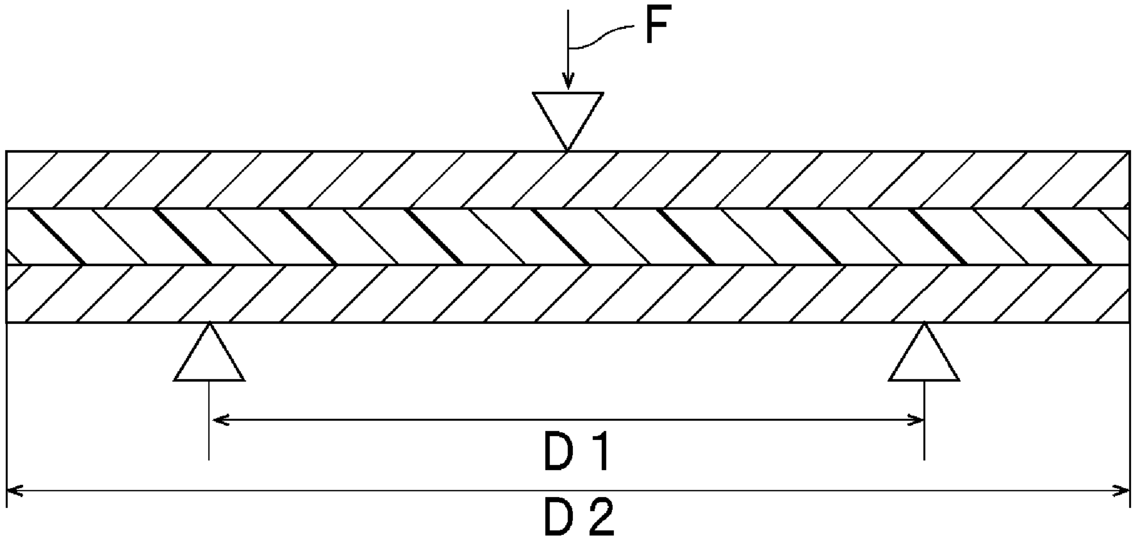

**INTERNATIONAL SEARCH REPORT**

International application No.
PCT/JP2017/013711

A. CLASSIFICATION OF SUBJECT MATTER
*C03C27/12*(2006.01)i, *B32B17/10*(2006.01)i, *B32B27/22*(2006.01)i, *B32B27/30*(2006.01)i, *C08F8/28*(2006.01)i, *C08F8/44*(2006.01)i, *C08L29/14*(2006.01)i

According to International Patent Classification (IPC) or to both national classification and IPC

B. FIELDS SEARCHED

Minimum documentation searched (classification system followed by classification symbols)
C03C27/12, B32B17/06-17/10, B32B27/22, B32B27/30, C08F8/28, C08F8/44, C08L29/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2012-519646 A (E.I. Du Pont de Nemours & Co.), 30 August 2012 (30.08.2012), claims; paragraphs [0002], [0007], [0009] to [0010], [0031] to [0033], [0041], [0048] to [0049], [0055] to [0056], [0059] to [0065], [0070], [0082], [0086] to [0089]; table 5 & US 2010/0227135 A1 paragraphs [0002], [0007], [0009] to [0010], [0035] to [0037], [0045], [0052] to [0053], [0059] to [0060], [0063] to [0069], [0074], [0084], [0086] to [0089]; table 5 & WO 2010/102282 A1 & EP 2408988 A1 & CN 102341556 A | 1-9 |

☒ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 June 2017 (22.06.17) | 04 July 2017 (04.07.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/013711

C (Continuation). DOCUMENTS CONSIDERED TO BE RELEVANT

| Category* | Citation of document, with indication, where appropriate, of the relevant passages | Relevant to claim No. |
|---|---|---|
| A | US 2013/0295357 A1 (CORNING INC.), 07 November 2013 (07.11.2013), paragraphs [0002] to [0005], [0042] to [0064], [0068] to [0070]; tables 1, 2 & JP 2014-523389 A & US 2012/0328843 A1 & WO 2012/177426 A1 & EP 2723562 A1 & TW 201302457 A & CN 103619582 A & KR 10-2014-0048944 A | 1-9 |
| A | JP 08-295541 A (Du Pont-Mitsui Polychemicals Co., Ltd.), 12 November 1996 (12.11.1996), claims; paragraphs [0001] to [0027] (Family: none) | 1-9 |
| A | JP 07-002932 A (Advanced Glass Systems Corp.), 06 January 1995 (06.01.1995), paragraphs [0001], [0006] to [0007], [0016], [0022] to [0023], [0037] to [0041], [0057] & US 4619973 A column 1, lines 6 to 13; column 1, line 56 to column 2, line 11; column 4, lines 34 to 36; column 5, lines 17 to 36; column 7, line 44 to column 8, line 42; column 11, line 58 to column 12, line 2 & US 4732944 A & US 4906703 A & JP 61-501455 A & WO 1986/001214 A1 & EP 191088 A1 & DE 3583023 D & MX 169866 B & ES 546862 A & ES 557575 A & CA 1277079 A | 1-9 |
| A | JP 57-153064 A (Sumitomo Chemical Co., Ltd.), 21 September 1982 (21.09.1982), claims; page 1, right column, line 18 to page 2, upper left column, line 3; page 2, lower left column, line 17 to page 2, lower right column, line 16; page 3, upper left column, line 14 to page 3, upper right column, line 12 (Family: none) | 1-9 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007070200 A
- US 20130236711 A1
- US 4969744 A